(19) Europäisches Patentamt
European Patent Office
Office européen des brevets

(11) EP 4 517 901 A1

(12) **EUROPEAN PATENT APPLICATION**
published in accordance with Art. 153(4) EPC

(43) Date of publication:
**05.03.2025 Bulletin 2025/10**

(21) Application number: **22946105.8**

(22) Date of filing: **13.06.2022**

(51) International Patent Classification (IPC):
***H01M 10/0567*** *(2010.01)* ***H01M 10/0525*** *(2010.01)*

(52) Cooperative Patent Classification (CPC):
**H01M 10/0525; H01M 10/0567**

(86) International application number:
**PCT/CN2022/098423**

(87) International publication number:
**WO 2023/240404 (21.12.2023 Gazette 2023/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology (Hong Kong) Limited**
**Hong Kong (HK)**

(72) Inventors:
- **ZOU, Hailin**
  **Ningde, Fujian 352100 (CN)**
- **CHEN, Peipei**
  **Ningde, Fujian 352100 (CN)**

(74) Representative: **Gong, Jinping**
**CocreateIP**
**Neumarkterstr. 21**
**81673 München (DE)**

(54) **ELECTROLYTE, SECONDARY BATTERY, BATTERY MODULE, BATTERY PACK, AND ELECTRIC APPARATUS**

(57) The present application provides an electrolyte, a secondary battery, a battery module, a battery pack and a power consuming device. The electrolyte of the present application comprises a first additive, wherein the first additive is a sulfur-containing compound with a boiling point not exceeding 70°C under a standard atmospheric pressure, and the mass content of the first additive in the electrolyte is 0.05% - 6%. The electrolyte of the present application can form a stable interface film on the surface of the negative electrode plate, which inhibits side reactions between the electrolyte and the negative electrode plate, thereby reducing the interface impedance of the negative electrode, reducing the precipitation of sodium, and improving the cycle performance and safety performance of the secondary battery.

5

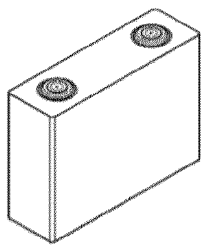

FIG. 1

EP 4 517 901 A1

## Description

### Technical Field

The present application relates to the technical field of secondary batteries, and in particular to an electrolyte, a secondary battery, a battery module, a battery pack and a power consuming device.

### Background Art

In recent years, with the increasing application range, secondary batteries are widely used in energy storage power systems such as hydraulic power, thermal power, wind power and solar power stations, as well as many fields such as electric tools, electric bicycles, electric motorcycles, electric vehicles, military equipment, and aerospace. Due to the great development of secondary batteries, higher requirements have also been placed on the secondary batteries in terms of energy density, cycling performance, safety performance, etc.

At present, a negative electrode interface film of a sodium-ion secondary battery is unstable and prone to side reactions with an electrolyte. An additive in the electrolyte easily forms by-products in the negative electrode that increase the interface impedance, causing the problem of sodium precipitation, which seriously reduces the cycle performance and safety performance of the battery. Therefore, there is an urgent need to improve this situation.

### Summary

The present application has been made in view of the above problems, and an objective of the present application is to provide an electrolyte, a secondary battery, a battery module, a battery pack and a power consuming device. By using the above-mentioned electrolyte, a stable negative electrode interface film can be obtained in the present application, so that the negative electrode plate is not easy to have side reactions with the electrolyte, such that the interface impedance of the negative electrode is reduced, the precipitation of sodium is reduced, and the cycle performance and safety performance of the secondary battery are improved.

In order to achieve the above-mentioned objective, a first aspect of the present application provides an electrolyte comprising a first additive, wherein the first additive is a sulfur-containing compound with a boiling point not exceeding 70°C under a standard atmospheric pressure, and the mass content of the first additive in the electrolyte is 0.05% - 6%; and optionally, the mass content of the first additive in the electrolyte is 0.05% - 5%, and more optionally 0.1% - 2%.

Therefore, the electrolyte of the present application can form a stable negative electrode interface film on the surface of the negative electrode plate, which inhibits side reactions between the electrolyte and the negative electrode, thereby reducing the interface impedance of the negative electrode, reducing the precipitation of sodium, and improving the cycle performance and safety performance of the secondary battery. The viscosity of the electrolyte of the present application is low, the first additive diffuses quickly in the electrolyte, and can quickly form a film on the surface of the negative electrode. The sodium ion migration rate on the surface of the negative electrode after the film is formed is good, thereby further reducing the interface impedance of the negative electrode.

In any embodiment, the first additive is selected from one or more of sulfur fluorides, sulfur oxides, sulfur carbon compounds, sulfides, sulfuryl compounds (optionally fluorine-containing sulfuryl compounds) and sulfinyl compounds (optionally fluorine-containing sulfinyl compounds); and

optionally, the first additive is selected from one or more of $SF_6$, $SF_4$, $SO_2F_2$, $SO_2$, $SO_3$, $CS_2$, dimethyl sulfide, methyl ethyl sulfide, $S_2F_2$, $SF_2$, $SOF_2$ and $SOF_4$.

The selected first additive has a low viscosity and a fast diffusion speed after being dissolved in a solvent, and is superior to a solvent and can react quickly on the surface of the negative electrode to form a sulfur-containing inorganic salt. This inorganic salt has a good sodium ion migration rate and is not easy to have side reactions with the electrolyte, such that the stability of the negative electrode interface film is improved, the interface impedance of the negative electrode is reduced, the precipitation of sodium is reduced, and the cycle performance and safety performance of the secondary battery are improved.

In any embodiment, the electrolyte further comprises a second additive, wherein the second additive is selected from one or more of fluorocarbonates and fluorocarboxylates, and the mass content of the second additive in the electrolyte is 0.005% - 12%, optionally 0.01% - 10%;

optionally, the second additive is fluoroethylene carbonate and/or ethyl 2,2-difluoroacetate; and
optionally, the mass content of the second additive in the electrolyte is 0.1% - 5%.

The first additive and the second additive can form an interface film with a good toughness and a high strength on the negative electrode, such that the interface film is not easily fractured due to the expansion and contraction of the

volume of the negative electrode active material, which further improves the stability of the interface film, reduces the interface impedance of the negative electrode, reduces the precipitation of sodium and improves the cycle performance and safety performance of the secondary battery. At the same time, the reduction potential of the first additive is higher than that of the second additive, which can inhibit the side reactions of the second additive on the negative electrode, thereby improving the cycle performance of the secondary battery.

The mass content of the second additive in the electrolyte is 0.01% - 10%, such that a negative electrode interface film with a moderate thickness and good toughness and strength can be formed, thereby further inhibiting side reactions between the negative electrode and the electrolyte, further improving the stability of the interface film, and further reducing the interface impedance of the negative electrode and reducing the precipitation of sodium, so as to improve the cycle performance and safety performance of the secondary battery.

In any embodiment, the mass content of the first additive in the electrolyte is W1%, the mass content of the second additive in the electrolyte is W2%, and the product of W1 and W2 is any value in the range of 0.01-24, optionally any value selected from the range of 0.05-16, and more optionally any value selected from the range of 0.05-10.

Since the first additive and the second additive respectively form a film rich in inorganic matters with a high strength and a film rich in organic matters with a strong toughness, when the mass contents of the first additive and the mass content of the second additive satisfy the above relationship, on the one hand, the toughness and strength of the negative electrode interface film can be ensured, and the stability of the negative electrode interface film can be improved, thus improving the service life of the battery cell; and on the other hand, the thickness of the interface film can be reduced, the interface impedance of the negative electrode can be reduced, thus improving the power performance of the battery cell.

In any embodiment, the electrolyte further comprises a solvent and/or an electrolyte salt; and optionally, the solvent is a carbonate solvent.

A second aspect of the present application further provides a secondary battery, comprising a positive electrode plate, a negative electrode plate, a separator, and an electrolyte of the first aspect of the present application.

Therefore, the secondary battery of the present application can form a stable negative electrode interface film by using the above-mentioned electrolyte, such that the negative electrode is not easy to have side reactions with the electrolyte, thereby reducing the interface impedance of the negative electrode, reducing the precipitation of sodium, and improving the cycle performance and safety performance of the secondary battery.

In any embodiment, the negative electrode plate comprises a negative electrode current collector and a negative electrode film layer provided on at least one surface of the negative electrode current collector; the mass content of sulfur element in the negative electrode film layer is 0.01% - 1. 14%, optionally 0.01% - 1%, and more optionally 0.05% - 0.5%.

Therefore, the stability of the negative electrode interface film is further improved, the interface impedance of the negative electrode is further reduced, the transport rate of sodium ions in the electrode plate is increased, and the precipitation of sodium is further reduced, thereby further improving the cycle performance and safety performance of the secondary battery.

A third aspect of the present application provides a battery module, comprising a secondary battery of the second aspect of the present application.

A fourth aspect of the present application provides a battery pack, comprising a battery module of the third aspect of the present application.

A fifth aspect of the present application provides a power consuming device, comprising at least one selected from a secondary battery of the second aspect of the present application, a battery module of the third aspect of the present application, and a battery pack of the fourth aspect of the present application.

## Brief Description of the Drawings

Fig. 1 shows a schematic diagram of a secondary battery according to an embodiment of the present application.
Fig. 2 shows an exploded view of the secondary battery according to an embodiment of the present application as shown in Fig. 1.
Fig. 3 shows a schematic diagram of a battery module according to an embodiment of the present application.
Fig. 4 shows a schematic diagram of a battery pack according to an embodiment of the present application.
Fig. 5 shows an exploded view of the battery pack according to an embodiment of the present application as shown in Fig. 4.
Fig. 6 shows a schematic diagram of a power consuming device using a secondary battery according to an embodiment of the present application as a power source.

Description of reference signs:

1 - battery pack; 2 - upper box body; 3 - lower box body; 4 - battery module; 5 - secondary battery; 51 - housing; 52 - electrode assembly; 53 - top cover assembly.

**Detailed Description of Embodiments**

Hereafter, embodiments of an electrolyte for a sodium-ion secondary battery, a sodium-ion secondary battery, a battery module, a battery pack and a power consuming device of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer $\geq 2$, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method including steps (a) and (b) indicates that the method may comprise steps (a) and (b) carried out sequentially, and may also comprise steps (b) and (a) carried out sequentially. For example, reference to "the method may further comprise step (c)" indicates that step (c) may be added to the method in any order, e.g., the method may comprise steps (a), (b) and (c), steps (a), (c) and (b), or steps (c), (a) and (b).

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

[Secondary battery]

A secondary battery, also known as a rechargeable battery or an accumulator, refers to a battery of which an active material can be activated by means of charging for reuse after the battery is discharged.

Generally, the secondary battery comprises a positive electrode plate, a negative electrode plate, a separator, and an electrolyte. During a charge and discharge process of the battery, active ions (e.g., sodium ions) are intercalated and de-intercalated back and forth between the positive electrode plate and the negative electrode plate. The separator is arranged between the positive electrode plate and the negative electrode plate, and mainly play a role of preventing the positive and negative electrodes from short-circuiting and enabling active ions to pass through. The electrolyte is provided between the positive electrode plate and the negative electrode plate and mainly functions for active ion conduction.

In some embodiments, the secondary battery is a lithium-ion secondary battery.

[Electrolyte]

The electrolyte functions to conduct ions between the positive electrode plate and the negative electrode plate. The electrolyte of the present application may be in a liquid or gel state.

An embodiment of the present application provides an electrolyte comprising a first additive, wherein the first additive is a sulfur-containing compound with a boiling point not exceeding 70°C under a standard atmospheric pressure, and the mass content of the first additive in the electrolyte is 0.05% - 6%; and optionally, the mass content of the first additive in the electrolyte is 0.05% - 5%, and more optionally 0.1% - 2%, for example, 1% or 2%.

Therefore, although the mechanism is not yet clear, the applicant has unexpectedly discovered that the first additive is superior to a solvent in the electrolyte and can react on the surface of the negative electrode to form a sulfur-containing inorganic salt product, which can inhibit the side reactions between the electrolyte and the negative electrode, thereby improving the stability of the negative electrode interface film, reducing the precipitation of sodium, reducing the interface impedance of the negative electrode, and improving the cycle performance and safety performance of the secondary battery. Moreover, the first additive has a low viscosity and a fast diffusion speed after being dissolved in the electrolyte and is easy to quickly form a film on the surface of the negative electrode. The inorganic salt product formed by the first additive on the surface of the negative electrode has a good migration rate of sodium ions, thereby further reducing the interface impedance of the negative electrode.

In some embodiments, the first additive is selected from one or more of sulfur fluorides, sulfur oxides, sulfur carbon compounds, sulfides, sulfuryl compounds (optionally fluorine-containing sulfuryl compounds) and sulfinyl compounds (optionally fluorine-containing sulfinyl compounds); and

optionally, the first additive is selected from one or more of $SF_6$, $SF_4$, $SO_2F_2$, $SO_2$, $SO_3$, $CS_2$, dimethyl sulfide, methyl ethyl sulfide, $S_2F_2$, $SF_2$, $SOF_2$ and $SOF_4$.

The selected first additive has a low viscosity and a fast diffusion speed after being dissolved in a solvent, and is superior to a solvent and can react quickly on the surface of the negative electrode to form a sulfur-containing inorganic salt. This inorganic salt has a good sodium ion migration rate and is not easy to have side reactions with the electrolyte, such that the stability of the negative electrode interface film is improved, the interface impedance of the negative electrode is reduced, the precipitation of sodium is reduced, and the cycle performance and safety performance of the secondary battery are improved.

In some embodiments, the electrolyte further comprises a second additive, wherein the second additive is selected from one or more of fluorocarbonates and fluorocarboxylates, and the mass content of the second additive in the electrolyte is 0.005% - 12%, and optionally 0.01% - 10%; optionally, the second additive is fluoroethylene carbonate and/or ethyl 2,2-difluoroacetate; wherein the structural formula of fluoroethylene carbonate is

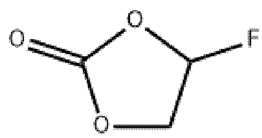

;

and

optionally, the mass content of the second additive in the electrolyte is 0.1% - 5%.

The first additive and the second additive can form an interface film with a good toughness and a high strength on the negative electrode interface, such that the interface film is not easily fractured due to the expansion and contraction of the volume of the negative electrode active material, which further improves the stability of the negative electrode interface film, reduces the interface impedance of the negative electrode, reduces the precipitation of sodium and improves the cycle performance and safety performance of the secondary battery. At the same time, the reduction potential of the first additive is higher than that of the second additive, which can inhibit the side reactions of the second additive on the negative electrode, thereby improving the cycle performance of the secondary battery.

The mass content of the second additive in the electrolyte is 0.01% - 10%, such that a negative electrode interface film with a moderate thickness and good toughness and strength can be formed, thereby further inhibiting side reactions between the negative electrode and the electrolyte, further improving the stability of the negative electrode interface film, and further reducing the interface impedance of the negative electrode and reducing the precipitation of sodium, so as to improve the cycle performance and safety performance of the secondary battery.

In some embodiments, the mass content of the first additive in the electrolyte is W1%, the mass content of the second additive in the electrolyte is W2%, and the product of W1 and W2 is any value selected from the range of 0.01-24, optionally any value selected from the range of 0.05-16, and more optionally any value selected from the range of 0.05-10.

Since the first additive and the second additive respectively form a film rich in inorganic matters with a high strength and a film rich in organic matters with a strong toughness, when the mass contents of the first additive and the

mass content of the second additive satisfy the above relationship, on the one hand, the toughness and strength of the negative electrode interface film can be ensured, and the stability of the negative electrode interface film can be improved, thus improving the service life of the battery cell; and on the other hand, the thickness of the interface film can be reduced, the interface impedance of the negative electrode can be reduced, thus improving the power performance of the battery cell.

In some embodiments, the electrolyte further comprises a solvent and/or an electrolyte salt; and optionally, the solvent is a carbonate solvent.

In some embodiments, the electrolyte salt may be selected from one or more of $NaPF_6$, $NaBF_4$, $NaN(SO_2F)_2$ (abbreviated as NaFSI), $NaClO_4$, $NaAsF_6$, $NaB(C_2O_4)_2$ (abbreviated as NaBOB), $NaBF_2(C_2O_4)$ (abbreviated as NaDFOB), $NaN(SO_2R_F)_2$, and $NaN(SO_2F)(SO_2R_F)$; wherein $R_F$ represents $C_bF_{2b+1}$, b is an integer in a range of 1-10, optionally an integer in a range of 1-3, and optionally, $R_F$ is $-CF_3$, $-C_2F_5$ or - $CF_2CF_2CF_3$;

optionally, the electrolyte salt is selected from one or more of $NaPF_6$, $NaN(SO_2F)_2$, $NaN(CF_3SO_2)_2$, $NaB(C_2O_4)_2$, and $NaBF_2(C_2O_4)$; and

more optionally, the electrolyte salt is selected from one or more of $NaPF_6$, $NaN(SO_2F)_2$, and $NaBF_2(C_2O_4)$.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, diethyl sulfone, 1,3-dioxolane, tetrahydrofuran, ethylene glycol dimethyl ether, and acetonitrile.

In some embodiments, the electrolyte further optionally comprises other additives besides the first additive and the second additive; for example, vinyl sulfate, maleic anhydride, propylene sultone, succinonitrile, adiponitrile, vinylene carbonate, succinic anhydride, 1,3-propane sultone, triethanolamine borate, triphenylborate, triallyl phosphate, tris(trimethylsilane)phosphate, etc.

In some embodiments, the electrolyte is an electrolyte used for a sodium-ion secondary battery.

[Negative electrode plate]

The negative electrode plate comprises a negative electrode current collector and a negative electrode film layer provided on at least one surface of the negative electrode current collector, wherein the negative electrode film layer comprises a negative electrode active material.

As an example, the negative electrode current collector has two surfaces opposite in its own thickness direction, and the negative electrode film layer is provided on either or both of the two opposite surfaces of the negative electrode current collector.

In some embodiments, the mass content of sulfur element in the negative electrode film layer is 0.01% - 1.14%, optionally 0.01% - 1%; and more optionally, the mass content of sulfur element in the negative electrode film layer is 0.05% - 0.5%. The above negative electrode film layer is the negative electrode film layer on the negative electrode plate after the secondary battery is formed.

Therefore, the stability of the negative electrode interface film is further improved, the interface impedance of the negative electrode is further reduced, the transport rate of sodium ions in the electrode plate is increased, and the precipitation of sodium is further reduced, thereby further improving the cycle performance and safety performance of the secondary battery.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. as an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, a silicon oxide, a silicon carbon composite, a silicon nitrogen composite, and a silicon alloy. The tin-based material may be selected from at least one of elemental tin, a tin oxide, and a tin alloy. However, the present application is not limited to these materials, and other conventional materials that can be used as negative electrode active materials for batteries can also be used. These negative electrode active materials may be used alone or as a combination of two or more.

In some embodiments, the negative electrode film layer may optionally comprise a binder. As an example, the binder may be selected from at least one of a styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may optionally comprise a conductive agent. As an example, the conductive agent may be selected from at least one of superconductive carbon, acetylene black, carbon black, Ketjen black, carbon dots, carbon nanotubes, graphene, and carbon nanofibers.

In some embodiments, the negative electrode film layer may optionally comprise other auxiliary agents, such as thickener (e.g. sodium carboxymethyl cellulose (CMC-Na)), etc.

In some embodiments, the negative electrode plate can be prepared by dispersing the above-mentioned components for preparing the negative electrode plate, such as negative electrode active material, conductive agent, binder and any other components, in a solvent (e.g., deionized water) to form a negative electrode slurry; and coating a negative electrode current collector with the negative electrode slurry, followed by procedures such as drying and cold pressing, so as to obtain the negative electrode plate.

[Positive electrode plate]

The positive electrode plate generally comprises a positive electrode current collector and a positive electrode film layer arranged on at least one surface of the positive electrode current collector, wherein the positive electrode film layer comprises a positive electrode active material.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode active material can be a positive electrode active material known in the art for batteries. As an example, the positive electrode active material may comprise at least one of the following materials: Prussian blue analogues, sodium-containing phosphates, sodium-containing transition metal oxides and the respective modified compounds thereof. However, the present application is not limited to these materials, and other conventional materials that can be used as positive electrode active materials for batteries may also be used. These positive electrode active materials may be used alone or in combination of two or more. The Prussian blue analogue is $Na_xP[R(CN)_6]_\delta \cdot zH_2O$, wherein P and R are each independently selected from at least one of transition metal elements, $0 < x \leq 2$, $0 < \delta \leq 1$, and $0 \leq z \leq 10$; the sodium-containing phosphate is $Na_bMe_c(PO_4)_dO_2X$, wherein Me is selected from one or more of Ti, Cr, Mn, Fe, Co, Ni, V, Cu and Zn, X is selected from one or more of F, Cl and Br, $0 < b \leq 4$, $0 < c \leq 2$, and $1 \leq d \leq 3$; and the sodium-containing transition metal oxide is $Na_aM_bFe_cO_2$, wherein M is a transition metal ion, $0.67 < a < 1.1$, $0.5 < b < 1$, and $0 < c < 0.5$.

In some embodiments, the positive electrode film layer further optionally comprises a binder. As an example, the binder may comprise at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer also optionally comprises a conductive agent. As an example, the conductive agent may comprise at least one of superconducting carbon, acetylene black, carbon black, Ketjen black, carbon dots, carbon nanotubes, graphene, and carbon nanofibers.

In some embodiments, the positive electrode plate can be prepared by dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

[Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, nonwoven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard housing, for example, a hard plastic housing, an aluminum housing, a steel housing, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

The shape of the secondary battery is not particularly limited in the present application and may be cylindrical, square or of any other shape. For example, FIG. 1 shows a secondary battery 5 with a square structure as an example.

In some embodiments, with reference to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate, and the separator may be subjected to a winding process or a laminating process to form an electrode assembly 52. The electrode assembly 52 is packaged in the accommodating cavity. The electrolyte infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

Fig. 3 shows a battery module 4 as an example. Referring to Fig. 3, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may further comprise an outer housing with an accommodating space, and the plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

Figs. 4 and 5 show a battery pack 1 as an example. Referring to Fig. 4 and Fig. 5, the battery pack 1 may comprise a battery box and a plurality of battery modules 4 provided in the battery box. The battery box comprises an upper box body 2 and a lower box body 3, wherein the upper box body 2 may cover the lower box body 3 to form a closed space for accommodating the battery modules 4. The plurality of the battery modules 4 may be arranged in the battery box in any manner.

In addition, the present application further provides a power consuming device. The power consuming device comprises at least one of the secondary battery, battery module, or battery pack provided by the present application. The secondary battery, the battery module or the battery pack may be used as a power supply or an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As a power consuming device, the secondary battery, battery module or battery pack can be selected according to the usage requirements thereof.

Fig. 6 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

[Examples]

Hereinafter, the examples of the present application will be explained. The examples described below are exemplary and are merely for explaining the present application, and should not be construed as limiting the present application. The examples in which techniques or conditions are not specified are based on the techniques or conditions

described in documents in the art or according to the product instructions. The reagents or instruments used therein on which no manufacturers are specified are all commercially available conventional products.

**Example 1**

1. Preparation of positive electrode plate: a positive electrode active material of sodium vanadium phosphate $Na_3V_2(PO_4)_3$, a conductive agent of acetylene black, and a binder of polyvinylidene fluoride (PVDF) were fully stirred and uniformly mixed in a N-methylpyrrolidone solvent system at a weight ratio of 90 : 5 : 5 to prepare a positive electrode slurry; and the positive electrode slurry was uniformly coated onto a positive electrode current collector of an aluminum foil, followed by drying, cold pressing and slitting to obtain a positive electrode plate.

2. Preparation of negative electrode plate: a negative electrode active material of hard carbon, a conductive agent of acetylene black, a binder of styrene butadiene rubber (SBR), and a thickener of sodium carbon methyl cellulose (CMC) were fully stirred and uniformly mixed in a deionized water solvent system at a weight ratio of 90 : 4 : 4 : 2 to prepare a negative electrode slurry; and the negative electrode slurry was coated onto a negative electrode current collector of an aluminum foil, followed by drying, cold pressing and slitting to obtain a negative electrode plate.

3. Separator: a PE porous polymer film was used.

4. Preparation of electrolyte: ethylene carbonate (EC) and ethyl methyl carbonate (EMC) were mixed at a mass ratio of 30 : 70, and a $NaPF_6$ sodium salt was dissolved in the above solution, such that the molar concentration of the $NaPF_6$ sodium salt in the electrolyte was 1M, and then $SO_2$ gas was introduced into the electrolyte solution and was stirred and dissolved, such that the mass content of the first additive $SO_2$ in the electrolyte solution was 1%.

5. Preparation of secondary battery: the above positive electrode plate, the separator and the negative electrode plate were stacked in sequence and wound to obtain an electrode assembly; and the electrode assembly was placed into an outer package, the electrolyte prepared above was added, followed by procedures such as packaging, standing, forming and aging to obtain a secondary battery.

**Examples 2-27 and Comparative examples 1-11**

The preparation methods of the secondary batteries in Examples 2-27 and Comparative examples 1-11 were similar to that of Example 1, but the parameters were adjusted, and the different parameters were shown in Table 1 in details.

Table 1: Parameters and test results of Examples 1-27 and Comparative examples 1-11

| No. | First additive | Mass content W1 % of first additive | Second additive | Mass content W2% of second additive | Product of W1 and W2 | Solvent | Electrolyte salt | Molar concentration of electrolyte salt | Mass content of sulfur in negative electrode plate | DC internal resistance (DCR) (mΩ) | Capacity retention rate during cycling |
|---|---|---|---|---|---|---|---|---|---|---|---|
| Example 1 | $SO_2$ | 1.00 | - | - | - | Mass ratio of EC to EMC 30: 70 | $NaPF_6$ | 1M | 0.35% | 33.2 | 88% |
| Example 2 | $SO_2$ | 0.05 | - | - | - | Mass ratio of EC to EMC 30:70 | $NaPF_6$ | 1M | 0.01% | 36.1 | 76% |

(continued)

| No. | First additive | Mass content W1 % of first additive | Second additive | Mass content W2% of second additive | Product of W1 and W2 | Solvent | Electrolyte salt | Molar concentration of electrolyte salt | Mass content of sulfur in negative electrode plate | DC internal resistance (DCR) (mΩ) | Capacity retention rate during cycling |
|---|---|---|---|---|---|---|---|---|---|---|---|
| Example 3 | $SO_2$ | 0.10 | - | - | - | Mass ratio of EC to EMC 30:70 | $NaPF_6$ | 1M | 0.05% | 35.7 | 77% |
| Example 4 | $SO_2$ | 2.00 | - | - | - | Mass ratio of EC to EMC 30:70 | $NaPF_6$ | 1M | 0.47% | 34.5 | 87% |
| Example 5 | $SO_2$ | 5.00 | - | - | - | Mass ratio of EC to EMC 30:70 | $NaPF_6$ | 1M | 0.96% | 36.3 | 84% |
| Example 6 | $SO_2$ | 6.00 | - | - | - | Mass ratio of EC to EMC 30:70 | $NaPF_6$ | 1M | 1.14% | 40.3 | 83% |
| Example 7 | $SO_2F_2$ | 1.00 | - | - | - | Mass ratio of EC to EMC 30:70 | $NaPF_6$ | 1M | 0.35% | 34.1 | 87% |
| Example 8 | $SF_4$ | 1.00 | - | - | - | Mass ratio of EC to EMC 30:70 | $NaPF_6$ | 1M | 0.29% | 33.9 | 85% |
| Example 9 | $SF_6$ | 1.00 | - | - | - | Mass ratio of EC to EMC 30:70 | $NaPF_6$ | 1M | 0.28% | 34.5 | 86% |
| Example 10 | $CS_2$ | 1.00 | - | - | - | Mass ratio of EC to EMC 30:70 | $NaPF_6$ | 1M | 0.31% | 34.3 | 84% |

(continued)

| No. | First additive | Mass content W1 % of first additive | Second additive | Mass content W2% of second additive | Product of W1 and W2 | Solvent | Electrolyte salt | Molar concentration of electrolyte salt | Mass content of sulfur in negative electrode plate | DC internal resistance (DCR) (mΩ) | Capacity retention rate during cycling |
|---|---|---|---|---|---|---|---|---|---|---|---|
| Example 11 | $SO_3$ | 1.00 | - | - | - | Mass ratio of EC to EMC 30:70 | $NaPF_6$ | 1M | 0.33% | 34.7 | 85% |
| Example 12 | Dimethyl sulfide | 1.00 | - | - | - | Mass ratio of EC to EMC 30:70 | $NaPF_6$ | 1M | 0.25% | 35.2 | 86% |
| Example 13 | Methyl ethyl sulfide | 1.00 | - | - | - | Mass ratio of EC to EMC 30:70 | $NaPF_6$ | 1M | 0.24% | 35.1 | 85% |
| Example 14 | $S_2F_2$ | 1.00 | - | - | - | Mass ratio of EC to EMC 30:70 | $NaPF_6$ | 1M | 0.22% | 34.8 | 86% |
| Example 15 | $SF_2$ | 1.00 | - | - | - | Mass ratio of EC to EMC 30:70 | $NaPF_6$ | 1M | 0.27% | 34.9 | 83% |
| Example 16 | $SOF_2$ | 1.00 | - | - | - | Mass ratio of EC to EMC 30:70 | $NaPF_6$ | 1M | 0.32% | 34.6 | 87% |
| Example 17 | $SOF_4$ | 1.00 | - | - | - | Mass ratio of EC to EMC 30:70 | $NaPF_6$ | 1M | 0.21% | 35.5 | 85% |
| Example 18 | $SO_2$ | 5.00 | Fluoroethylene carbonate | 0.01 | 0.05 | Mass ratio of EC to EMC 30:70 | $NaPF_6$ | 1M | 0.86% | 36.6 | 87% |

(continued)

| No. | First additive | Mass content W1 % of first additive | Second additive | Mass content W2% of second additive | Product of W1 and W2 | Solvent | Electrolyte salt | Molar concentration of electrolyte salt | Mass content of sulfur in negative electrode plate | DC internal resistance (DCR) (mΩ) | Capacity retention rate during cycling |
|---|---|---|---|---|---|---|---|---|---|---|---|
| Example 19 | $SO_2$ | 0.50 | Fluoroethylene carbonate | 0.10 | 0.05 | Mass ratio of EC to EMC 30:70 | $NaPF_6$ | 1M | 0.13% | 35.6 | 84% |
| Example 20 | $SO_2$ | 1.00 | Fluoroethylene carbonate | 1.00 | 1 | Mass ratio of EC to EMC 30:70 | $NaPF_6$ | 1M | 0.32% | 34.7 | 93% |
| Example 21 | $SO_2$ | 1.00 | Fluoroethylene carbonate | 3.00 | 3 | Mass ratio of EC to EMC 30:70 | $NaPF_6$ | 1M | 0.26% | 37.1 | 91% |
| Example 22 | SO2 | 1.00 | Fluoroethylene carbonate | 5.00 | 5 | Mass ratio of EC to EMC 30:70 | NaPF6 | 1M | 0.26% | 40.7 | 89% |
| Example 23 | $SO_2$ | 1.00 | Fluoroethylene carbonate | 10.00 | 10 | Mass ratio of EC to EMC 30:70 | $NaPF_6$ | 1M | 0.21% | 42.6 | 85% |
| Example 24 | $SO_2$ | 2 | Fluoroethylene carbonate | 8.00 | 16 | Mass ratio of EC to EMC 30:70 | $NaPF_6$ | 1M | 0.41% | 55.3 | 80% |
| Example 25 | $SO_2$ | 1 | Ethyl difluoroacetate | 1.00 | 1 | Mass ratio of EC to EMC 30:70 | $NaPF_6$ | 1M | 0.31% | 35.3 | 92% |
| Example 26 | $SO_2$ | 5 | Fluoroethylene carbonate | 0.005 | 0.025 | Mass ratio of EC to EMC 30:70 | $NaPF_6$ | 1M | 0.41% | 36.4 | 84% |

(continued)

| No. | First additive | Mass content W1 % of first additive | Second additive | Mass content W2% of second additive | Product of W1 and W2 | Solvent | Electrolyte salt | Molar concentration of electrolyte salt | Mass content of sulfur in negative electrode plate | DC internal resistance (DCR) (mΩ) | Capacity retention rate during cycling |
|---|---|---|---|---|---|---|---|---|---|---|---|
| Example 27 | $SO_2$ | 2 | Fluoroethylene carbonate | 12.00 | 24 | Mass ratio of EC to EMC 30:70 | $NaPF_6$ | 1M | 0.41% | 67.3 | 76% |
| | | | | | | | | | | | |
| Comparative example 1 | - | - | - | - | - | Mass ratio of EC to EMC 30:70 | $NaPF_6$ | 1M | 0.005% | 38.5 | 70% |
| Comparative example 2 | $SO_2$ | 0.03 % | - | - | - | Mass ratio of EC to EMC 30:70 | $NaPF_6$ | 1M | 0.008% | 37.3 | 71% |
| Comparative example 3 | $SO_2$ | 10% | - | - | - | Mass ratio of EC to EMC 30:70 | $NaPF_6$ | 1M | 2.41% | 48.6 | 79% |
| Comparative example 4 | 1,3-propane sultone (PS) | 1% | - | - | - | Mass ratio of EC to EMC 30:70 | $NaPF_6$ | 1M | 0.42% | 51.4 | 78% |
| Comparative example 5 | Vinyl sulfate (DTD) | 1% | - | - | - | Mass ratio of EC to EMC 30:70 | $NaPF_6$ | 1M | 0.61% | 50.2 | 77% |
| Comparative example 6 | - | | Fluoroethylene carbonate | 1% | - | Mass ratio of EC to EMC 30:70 | $NaPF_6$ | 1M | 0.005% | 40.2 | 78% |
| Comparative example 7 | - | - | Fluoroethylene carbonate | 3% | - | Mass ratio of EC to EMC 30:70 | $NaPF_6$ | 1M | 0.005% | 42.5 | 74% |

(continued)

| No. | First additive | Mass content W1 % of first additive | Second additive | Mass content W2% of second additive | Product of W1 and W2 | Solvent | Electrolyte salt | Molar concentration of electrolyte salt | Mass content of sulfur in negative electrode plate | DC internal resistance (DCR) (mΩ) | Capacity retention rate during cycling |
|---|---|---|---|---|---|---|---|---|---|---|---|
| Comparative example 8 | - | - | Fluoroethylene carbonate | 10% | - | Mass ratio of EC to EMC 30:70 | $NaPF_6$ | 1M | 0.005% | 56.3 | 72% |
| Comparative example 9 | 1,3-propane sultone (PS) | 1% | Fluoroethylene carbonate | 1% | 2 | Mass ratio of EC to EMC 30:70 | $NaPF_6$ | 1M | 1.21% | 61.7 | 68% |
| | Vinyl sulfate (DTD) | 1% | | | | | | | | | |
| Comparative example 10 | $SF_6$ | 10% | - | - | - | Mass ratio of EC to EMC 30:70 | $NaPF_6$ | 1M | 3.12% | 51.6 | 76% |
| Comparative example 11 | $SF_6$ | 0.03 % | - | - | - | Mass ratio of EC to EMC 30:70 | $NaPF_6$ | 1M | 0.008% | 37.7 | 72% |

**Test of battery**

(1) Determination of the mass content of sulfur element in the negative electrode film layer of a secondary battery: at 25°C, the fresh sodium-ion secondary batteries prepared in the Examples and Comparative examples were left to stand for 5 minutes, charged to 4.2 V at a constant current rate of 1 C, then charged at the constant voltage until the current was less than or equal to 0.05 C, left to stand for 5 minutes, and then discharged to 2.0 V at a constant current rate of 1 C to obtain a fully discharged battery cell. The fully discharged battery cell was disassembled, the negative electrode plate was taken out, the negative electrode film layer on the negative electrode plate was scraped off with a blade, and the mass content of sulfur element in the scraped material was tested by inductively coupled plasma atomic emission spectrometer according to EPA 6010D-2014 test standard, that is, the mass content of sulfur element in the negative electrode film.

(2) Test of normal-temperature cycle performance of secondary batteries:

at 25°C, the sodium-ion secondary batteries were left to stand for 5 minutes, charged to 4.2 V at a constant current rate of 1 C, and then charged at the constant voltage until the current was less than or equal to 0.05 C, left to stand for 5 minutes, and then discharged to 2.0 V at a constant current rate of 1 C, which was a charge and discharge cycle. The discharge capacity at this time was recorded as the discharge capacity of the 1st cycle of the sodium-ion secondary batteries. The sodium-ion secondary batteries were subjected to 800 cycles of charge and discharge tests according to the above method, the discharge capacity after each cycle was recorded, and the capacity retention rate of the secondary batteries was calculated according to the following formula;

capacity retention rate of secondary battery (%) = 100% × discharge capacity of the 800th cycle/discharge capacity of the 1st cycle.

(3) DC impedance test of secondary batteries:
at 25°C, the sodium-ion secondary batteries were left to stand for 5 minutes, charged to 4.2 V at a constant current rate of 1 C, then charged at the constant voltage until the current was less than or equal to 0.05 C, and the state of charge (SOC) of the batteries at the time was 100%; and then the batteries were left to stand for 5 minutes, discharged at a constant current rate of 1 C, and the SOC of the sodium-ion secondary batteries was adjusted to 50%. The sodium ion secondary batteries with 50% SOC were continuously left to stand for 10 minutes, and the voltage U1 for the last second of standing was recorded; and then the batteries were discharged at a constant current rate of 4 C for 30 seconds, and the current I of the constant current discharge and the voltage U2 of the last second of the constant current discharge were recorded, and the DC impedance of the secondary batteries was calculated according to the following formula;

$$\text{DC impedance of secondary battery} = (U2 - U1)/I.$$

The above test results were shown in Table 1 above.

It could be seen from Table 1 that
by comparing the results of Examples 1-6 with those of Comparative examples 1-3, and comparing the results of Example 9 with those of Comparative examples 10-11, it could be concluded that when the mass content of the first additive of the present application in the electrolyte was 0.05% - 5 %, the DC internal resistance of the secondary battery was lower, and when the mass content of the first additive of the present application in the electrolyte was 1% - 6%, the cycle capacity retention rate of the secondary battery was higher. When the mass content of the first additive in the electrolyte was less than 0.05% (Comparative examples 2 and 11), the amount of the sulfur-containing inorganic salt product formed was small, which was not enough to inhibit the side reactions of the electrolyte, resulting in a poor cycle performance and a slightly higher DC internal resistance of the secondary battery. When the mass content of the first additive in the electrolyte was greater than 6% (Comparative examples 3 and 10), the internal resistance of the secondary battery was obviously increased due to the excessive first additive, and the cycle performance was slightly poor.

By comparing the results of Examples 1 and 7-17 with those of Comparative examples 4-5, and comparing the results of Example 20 with those of Comparative example 9, it could be concluded that in the present application, since a sulfur-containing compound with a boiling point not exceeding 70°C was used as the first additive and added to the electrolyte, the prepared secondary battery has a lower DC internal resistance and a higher cycle capacity retention rate.

By comparing the results of Examples 20, 21 and 23 with those of Comparative examples 6-8, correspondingly, it could be concluded that compared with only adding the second additive to the electrolyte, in the present application, the DC internal resistance of the secondary battery could be significantly reduced and the cycle capacity retention rate of the secondary battery could be significantly improved by adding a sulfur-containing compound with a boiling point not exceeding 70°C as the first additive to the electrolyte at the same time.

By comparing the results of Example 1 with those of Examples 20-23 and 25, and comparing the results of Example 5 with those of Examples 18 and 26, it could be concluded that when the mass content of the second additive of the present application in the electrolyte was 0.01% - 10%, the cycle capacity retention rate of the secondary battery was further improved due to the better film forming quality of the negative electrode.

By comparing Examples 18-23 and 25 with Examples 24, 26 and 27, it could be concluded that in the present application, when the product of W1 and W2 was any value from 0.05-10, the negative electrode interface film of the secondary battery prepared was stable, the DC internal resistance was also at a suitable level, and the cycle capacity retention rate was further improved.

By comparing Examples 1-5 with Example 6 and Comparative examples 2-3, and comparing Example 9 with Comparative examples 10-11, it could be concluded that the mass content of sulfur element in the negative electrode film layer of the present application was 0.01% - 1%, the secondary battery prepared had a stable negative electrode interface film, the DC internal resistance was also at a suitable level, and the cycle capacity retention rate was further improved.

In summary, a stable negative electrode interface film can be obtained by using the electrolyte of the present application, such that the negative electrode plate is not easy to have side reactions with the electrolyte, thereby reducing the precipitation of sodium, reducing the DC internal resistance of the secondary battery, and improving the cycle performance and safety performance of the secondary battery.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. In addition, without departing from the gist of the present application, various modifications that are made to the embodiments and are conceivable to those skilled in the art, and other modes constructed by combining some

of the constituent elements of the embodiments also fall within the scope of the present application.

## Claims

1. An electrolyte comprising a first additive, wherein the first additive is a sulfur-containing compound with a boiling point not exceeding 70°C under a standard atmospheric pressure, and the mass content of the first additive in the electrolyte is 0.05% - 6%.

2. The electrolyte according to claim 1, wherein the mass content of the first additive in the electrolyte is 0.05% - 5%, and optionally 0.1% - 2%.

3. The electrolyte according to claim 1, wherein the first additive is selected from one or more of sulfur fluorides, sulfur oxides, sulfur carbon compounds, sulfides, sulfuryl compounds and sulfinyl compounds; and
optionally, the first additive is selected from one or more of $SF_6$, $SF_4$, $SO_2F_2$, $SO_2$, $SO_3$, $CS_2$, dimethyl sulfide, methyl ethyl sulfide, $S_2F_2$, $SF_2$, $SOF_2$ and $SOF_4$.

4. The electrolyte according to any one of claims 1-3, which further comprises a second additive, wherein the second additive is selected from one or more of fluorocarbonates and fluorocarboxylates, and the mass content of the second additive in the electrolyte is 0.005% - 12%, and optionally 0.01% - 10%; and
optionally, the second additive is fluoroethylene carbonate and/or ethyl 2,2-difluoroacetate.

5. The electrolyte according to claim 4, wherein the mass content of the second additive in the electrolyte is 0.1% - 5%.

6. The electrolyte according to claim 4 or 5, wherein the mass content of the first additive in the electrolyte is W1%, the mass content of the second additive in the electrolyte is W2%, and the product of W1 and W2 is any value selected from a range of 0.01-24, optionally any value selected from a range of 0.05-16, and more optionally any value selected from a range of 0.05-10.

7. The electrolyte according to any one of claims 1-6, which further comprises a solvent and/or an electrolyte salt; and optionally, the solvent is a carbonate solvent.

8. A secondary battery, comprising a positive electrode plate, a negative electrode plate, a separator, and an electrolyte according to any one of claims 1-7.

9. The secondary battery according to claim 8, wherein the negative electrode plate comprises a negative electrode current collector and a negative electrode film layer provided on at least one surface of the negative electrode current collector; and the mass content of sulfur element in the negative electrode film layer is 0.01% - 1.14%, and optionally 0.01%-1%.

10. The secondary battery according to claim 9, wherein the mass content of sulfur element in the negative electrode film layer is 0.05% - 0.5%.

11. A battery module, comprising a secondary battery according to any one of claims 8-10.

12. A battery pack, comprising a battery module according to claim 11.

13. A power consuming device, comprising at least one selected from a secondary battery according to any one of claims 8-10, a battery module according to claim 11 and a battery pack according to claim 12.

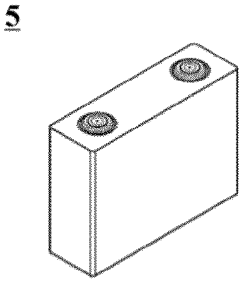


FIG. 1

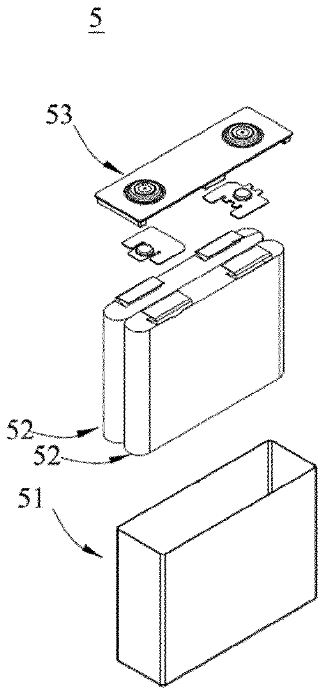


FIG. 2

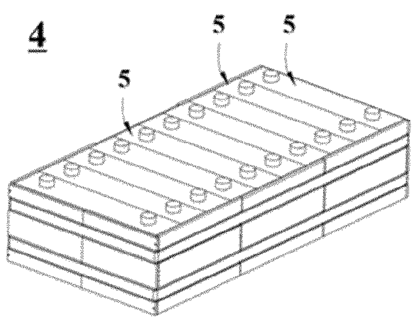


FIG. 3

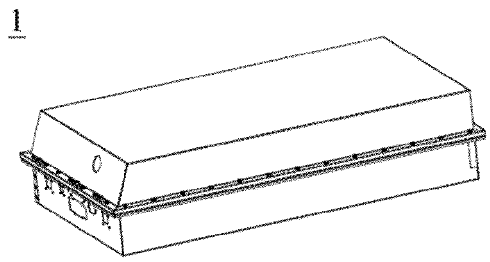


*FIG. 4*

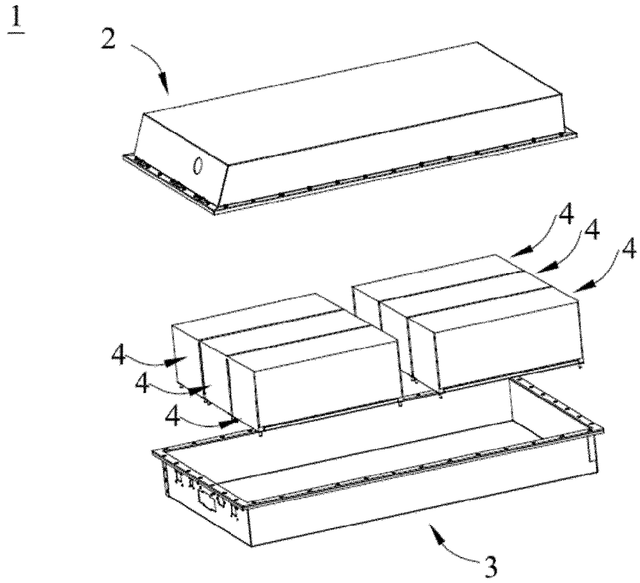


*FIG. 5*

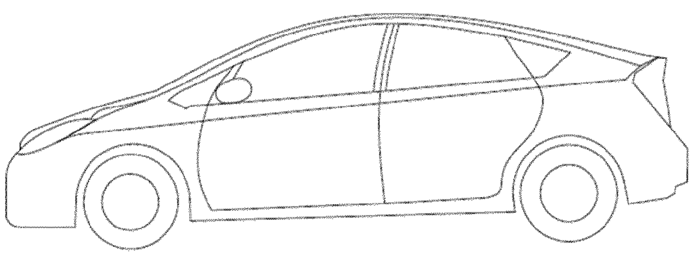

*FIG. 6*

## INTERNATIONAL SEARCH REPORT

International application No.
**PCT/CN2022/098423**

**A. CLASSIFICATION OF SUBJECT MATTER**

H01M10/0567(2010.01)i;H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; VEN; ENTXT; CNKI: 电池, 电解液, 含硫化合物, 沸点, 二氧化硫, SO2, 氟化硫, 氟代碳酸亚乙酯, FEC, battery, electrolyte, sulfur containing compound, boiling point, sulfur dioxide, sulfur fluoride, fluoroethylene carbonate

**C. DOCUMENTS CONSIDERED TO BE RELEVANT**

| Category* | Citation of document, with indication, where appropriate, of the relevant passages | Relevant to claim No. |
|---|---|---|
| X | CN 112331914 A (SHANSHAN ADVANCED MATERIALS (QUZHOU) CO., LTD.) 05 February 2021 (2021-02-05)<br>description, paragraphs 2 and 6-50 | 1-13 |
| X | CN 111864261 A (NINGDE CONTEMPORARY AMPEREX TECHNOLOGY CO., LTD.) 30 October 2020 (2020-10-30)<br>description, paragraphs 2 and 10-52 | 1-3, 7-13 |
| Y | CN 111864261 A (NINGDE CONTEMPORARY AMPEREX TECHNOLOGY CO., LTD.) 30 October 2020 (2020-10-30)<br>description, paragraphs 2 and 10-52 | 4-6 |
| X | CN 112310473 A (DONGGUAN SHANSHAN BATTERY MATERIALS CO., LTD. et al.) 02 February 2021 (2021-02-02)<br>description, paragraphs 2 and 4-22 | 1-13 |
| Y | CN 103078141 A (NINGDE AMPEREX TECHNOLOGY LTD.) 01 May 2013 (2013-05-01)<br>description, paragraphs 7-21 | 4-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 February 2023** | **01 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.
**PCT/CN2022/098423**

**C. DOCUMENTS CONSIDERED TO BE RELEVANT**

| Category* | Citation of document, with indication, where appropriate, of the relevant passages | Relevant to claim No. |
|---|---|---|
| A | JP 2008311211 A (SANYO ELECTRIC CO., LTD.) 25 December 2008 (2008-12-25)<br>entire document | 1-3 |

Form PCT/ISA/210 (second sheet) (July 2022)

**INTERNATIONAL SEARCH REPORT**
**Information on patent family members**

International application No.
**PCT/CN2022/098423**

| Patent document cited in search report | | | Publication date (day/month/year) | Patent family member(s) | | | Publication date (day/month/year) |
|---|---|---|---|---|---|---|---|
| CN | 112331914 | A | 05 February 2021 | None | | | |
| CN | 111864261 | A | 30 October 2020 | WO | 2020216052 | A1 | 29 October 2020 |
| | | | | EP | 3944391 | A1 | 26 January 2022 |
| | | | | US | 2022102757 | A1 | 31 March 2022 |
| CN | 112310473 | A | 02 February 2021 | None | | | |
| CN | 103078141 | A | 01 May 2013 | None | | | |
| JP | 2008311211 | A | 25 December 2008 | US | 2008286657 | A1 | 20 November 2008 |

Form PCT/ISA/210 (patent family annex) (July 2022)